(19) Europäisches Patentamt / European Patent Office / Office européen des brevets

(11) **EP 3 203 687 A1**

(12) **EUROPEAN PATENT APPLICATION**

(43) Date of publication:
**09.08.2017 Bulletin 2017/32**

(51) Int Cl.:
***H04L 12/24*** *(2006.01)*

(21) Application number: **16305130.3**

(22) Date of filing: **05.02.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(71) Applicant: **Alcatel Lucent**<br>**92100 Boulogne-Billancourt (FR)**<br><br>(72) Inventors:<br>• **NOIRIE, Ludovic**<br>**91620 NOZAY (FR)** | • **LE PALLEC, Michel**<br>**91620 NOZAY (FR)**<br><br>(74) Representative: **Berthier, Karine**<br>**Alcatel-Lucent International**<br>**148/152, route de la Reine**<br>**92100 Boulogne-Billancourt (FR)**<br><br>Remarks:<br>Amended claims in accordance with Rule 137(2) EPC. |

(54) **METHOD, SYSTEM AND COMPUTER READABLE MEDIUM TO DETERMINE A CLASS OF AN IOT SERVICE**

(57) Method, system and computer readable medium to determine a class of an IoT service. The IoT service is characterized by a plurality of elements, each element is characterized by a plurality of first characteristics belonging to a first type of characteristics and a plurality of second characteristics belonging to a second type of characteristics. The IoT service is realized by a set of connected objects that are involved in this IoT service. The method comprises a first step of counting, for at least one couple constituted of one of the first characteristics of the first type of characteristics and of one of the second characteristics of the second type of characteristics, a first number of elements having both this first characteristic and this second characteristic. The method also comprises a second step of counting the number of characteristics of the second type of characteristics for which, for each characteristic of the first type of characteristics, the first step counted the same number of elements associated with this couple of first type of characteristics and second type of characteristics.

Fig. 1

EP 3 203 687 A1

**Description**

FIELD OF INVENTION

The present subject matter relates to the classification of Internet of Things (IoT) based services. By IoT we mean a network of physical objects or "things" embedded with electronics, software, sensors and/or actuators, and network connectivity, which enables these objects to collect and exchange data. More specifically the present subject matter proposes a solution to be able to efficiently encode and classify any IoT-based services - from a broad set of such services - in order to quickly & efficiently identify personalized services that could be offered to end-users.

BACKGROUND

Existing solutions focus service classification based on (the combination of) the connected devices. In particular the existing solutions used a method comprising:

- the classification by types of the available connected devices;
- then pattern matching techniques are used to identify best devices / services in the pool of classified devices / services.

IoT-based service search mechanisms mainly focus on identifying a single connected device to perform a requested service. See for example the article "A scalable IoT service search based on clustering and aggregation" of Ben Fredj, M. Boussard, D. Kofman, and L. Noirie published in iThings 2013, August 2013 (http://dx.doi.org/10.1109/GreenCom-iThings-CPSCom.2013.86) and the thesis of Wenyi Xu "Modeling and exploiting the knowledge base of web of things" (https://hal.inria.fr/THESES-UPMC/tel-01178286v1). This thesis considers composition of several devices to offer a service, see section V.2.

The approaches of the state of the art suffer from the following issues:

1) Service ambiguity: a pool of same types of objects may lead to different services. As an illustration, 'camera' and 'screen' types may lead to the following services:

- Video-broadcasting: 1 camera + n screens in n different locations, n >1; or
- Videoconference: n times (1 screen + 1 camera); or
- Video-surveillance: n cameras and 1 (or few) screen(s).

2) Service polymorphism: similar services may be supported by very different types of connected devices and may not be classified to the same service class while delivering the same service. As an illustration, a video conf service can be supported by:

- A connected TV and a connected webcam (with microphone) or
- A connected PC with integrated screen and webcam or;
- A Smartphone;

3) Semantic ambiguity: inaccuracies and significant computing power resulting from semantics methodologies.

Description of connected devices and IoT-based services are typically performed through semantics techniques As a result, an open world with many languages and many interpretations leads to an imperfect service offer and to the use of significant computing resources potentially impacting the user experience (e.g. time to propose and set up an IoT based service).

SUMMARY

This summary is provided to introduce concepts related to the classification of Internet of Things (IoT) services.
In one implementation, a method is described. The aim of this method is the determination of a class of an IoT service. The IoT service is characterized by a plurality of elements, each element is characterized by a plurality of first characteristics belonging to a first type of characteristics and a plurality of second characteristics belonging to a second type of characteristics. The IoT service is realized by a set of connected objects that are involved in this IoT service. The method comprises a first step of counting, for at least one couple constituted of one of the first characteristics of the first type of characteristics and of one of the second characteristics of the second type of characteristics, a first number of elements having both this first characteristic and this second characteristic. The method also comprises a second step of counting the number of characteristics of the second type of characteristics for which, for each characteristic of the first type of characteristics, the first step counted the same number of elements associated with this couple of first type of characteristics and second type of characteristics.

In another implementation, a system is described. The aim of this system is to determine a class of an IoT service. The IoT service is characterized by a plurality of elements, each element being characterized by a plurality of first characteristics belonging to a first type of characteristics and a plurality of second characteristics belonging to a second type of characteristics The IoT service is realized by a set of connected objects that are involved in this IoT service. This system comprises a first module of counting, for at least one couple constituted of one of the first characteristics of the first type of characteristics and of one of the second characteristics of the second type of characteristics, a first number of elements having both this first characteristic and this second characteristic. This system also comprises a second module of counting the number of characteristics of the second type of characteristics for which, for each characteristic of the first type of characteristics, the first step counted the same number of elements associated with this couple of first type of characteristics and second type of characteristics.

In another implementation a computer-readable medium is described. The computer-readable medium has embedded thereon a method to determine a class of an IoT service. The IoT service is characterized by a plurality of elements, each element being characterized by a plurality of first characteristics belonging to a first type of characteristics and a plurality of second characteristics belonging to a second type of characteristics The IoT service is realized by a set of connected objects that are involved in this IoT service. The method comprises a first step of counting, for at least one couple constituted of one of the first characteristics of the first type of characteristics and of one of the second characteristics of the second type of characteristics, a first number of elements having both this first characteristic and this second characteristic. The method also comprises a second step of counting the number of characteristics of the second type of characteristics for which, for each characteristic of the first type of characteristics, the first step counted the same number of elements associated with this couple of first type of characteristics and second type of characteristics.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 presents an embodiment of the method of the present subject matter.

Figure 2 presents an embodiment of the system of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

IoT service identification or classification is useful for example when one wants to build a catalog of IoT services, classified by classes, and associating for each class some examples of instantiations. Such a catalog can be built by applying our identification / classification method to each existing IoT service in a given domain, these IoT services being the instantiations of the classes obtained by the method of the present subject matter.

Within the present divulgation the following definitions are used:

- Connected Object: a connected end-device which is interacting with the real physical world and which can process, generate and/or receive data flows that are coming from / going to a data network.
- IoT-based Service: a set (an aggregation) of connected objects that are involved in a service set-up for/by a (several) user(s).
- Physical Interface: an interface of a Connected Object with the real world.

- A Physical Interface is an Element of a Connected Object and (by aggregation) of an IoT-based Service.
- A Connected Object or an IoT-based Service can be seen as a Composition of Elements.
- Generic definition of a class: different entities are in the same class if they have some (pre)defined "similarities", i.e., if they share similar (pre)defined characteristics.

Within this divulgation by identification / classification we mean to identify the class of a Composition of Elements.

Within this divulgation by IoT-based service identification / classification we mean to identify the class of an IoT-based Service.

The present subject matter can be used to find the class of a given Composition of Elements / IoT-based service, or to build a catalog of Compositions of Elements / IoT-based services.

In an embodiment of the present subject matter the identification of the class of the IoT based service will be based on the characteristics of the Elements (Physical Interfaces) belonging to the Composition of elements (IoT-based Service). Generically, the characteristics of the elements are divided into two types that will be involved in the successive steps of the method: Type 1 and Type 2. By type 1 we mean an intrinsic characteristic of the element (nature of the Physical Interface signal with its directivity), in other words what the physical interface does, we need to modify the Connected Object to change it. By type 2 we mean an extrinsic characteristic of the element ("smart space" containing the Physical Interface, people / entities using (actively or passively) the physical interface), in other words where the Physical Interface is, this may change if we move the Connected Object.

In other words the description of the individual physical interfaces of the connected objects contains all or part of the following information pieces:

- Types of the physical interfaces of the connected object. Indeed from a generic physical perspective, an interface type could be optical, mechanical/ acoustic (sound, pressure, and temperature), electromagnetic or chemical, etc. The description of the signal may use a hierarchical structure, from fewer details (very high-level description) to all details. The type of the physical interface can be part of the intrinsic characteristic of the physical interface.
- Directivity of the signal of the physical interfaces. IN (sensor mode): the signal coming from the real word (e.g., camera for the video type example). OUT (actuator mode): the signal is going to the real world (e.g., screen for the video type example). The directivity of the signal can be part of the intrinsic characteristic of the physical interface.
- Spatial location of the physical interfaces. Where the physical interface is located (qualitative/relative: room, home, car, human body or quantitative/absolute: GPS coordinates). The spatial location can be part of the extrinsic characteristic of the physical interface.
- Availability time of the physical interfaces in order to address 'dynamic scenarios'. When the physical interfaces can be used. The availability time can be part of the extrinsic characteristic of the physical interface.
- Type of 'entities' associated to the physical interfaces. Basically, the type of interacting entities can be part of the extrinsic characteristic of the physical interface. They are different classes of 'entities' interacting with connected devices through physical interfaces:

  ◦ Human/people related. For a lot of scenarios, a required 'human' association is explicit (e.g. through user authentication) or implicit (regarding how a physical interface is designed or represented).
  ◦ Non human/people related: animal, machines, plants, any 'objects' out of human/people.

From a generic perspective, this 'associated description' allows for identifying whether 'people' are directly involved in IoT based services or not and to classify services accordingly (e.g. 'Human to Human' or 'Human to Machines', 'Machines to Machine'... ).

Moreover, the description of the signal may also use a hierarchical structure, from less details (very high-level description) to all details, e.g.: from video (here, 'video' = capture of optical signals on a significant time , to be distinguished for example with photo = capture of optical signals on a very short time) to optical spectrum information (visible light, infra-red, ...) and/or optical resolution (High Definition vs. Low Definition related to the spatial sampling of optical signals) and/or video fluidity (number of images/s in video related to the periodic capture of optical signals over a given integration time)

The minimum required is the higher-level description ("video" in our example). In most cases, the users do not care about the very detailed description, what really matters is the high-level description: in the videoconference example, what characterizes the fact that it is a videoconference service is the exchange of optical signals, not the optical spectrum nor the resolution. In some cases, lower details may be taken into account (e.g., optical resolution and video fluidity when the quality of the videoconference service matters: High Quality vs. Low Quality).

The previously described parameters can be used to make a description of the IoT-bases services. More specifically all or part of the following information pieces can be used:

- The full set or a subset of physical interfaces with their own descriptions. It encodes the minimal information one can have on the IoT-based service with our solution. In particular, one can deduce from it the number of physical interfaces for some any given characteristics in their description (signal type and/or directivity, localization, associated users, time information...), e.g., video-in (camera) and video-out (screen) in the same room. Considering a subset may be interesting to classify the IoT-based services according to some given point of view (by filtering: e.g. restricting the physical interfaces to video signal type only for example).

- Optionally, the relationship between the physical interfaces can be used. It encodes a direct relationship between physical signals associated to different interfaces. It may be known while considering physical interfaces belonging to the same connected device. It may involve intermediate functions (nodes in a graph structure) to transform the signals for compatibility, but this is not compulsory. However in some case it may be not know, in particular when users would like to set up an IoT-based service by associating some devices, without explicitly defining the relations between these devices.

By smart space we mean a representation of the real world in interaction with the Physical Interface. It could be: a space (city, building, home, room, part of a room, etc.), entities in a space (people, animals, objects, etc.), entities in contact with the interface (person wearing a connected swatch, etc.).

Each element is characterized by a couple of two characteristics, one characteristic being of Type 1 and the other one being of Type 2

In an embodiment of the present subject matter the class identification method will have steps in which some *counting.* procedures will be used. There may be different ways of counting by aggregating some numbers in groups forming a partition P of the set of the natural numbers:

- Natural counting 0, 1, 2, 3, 4, ... , n-1, n, n+1, ... $P = (P_i)_{i \in N}$ with $\forall n \in \mathbf{N}$, $P_n = \{n\}$

- Existence counting 0, "1 or more" $P = (P_0, P_{1+})$ with $P_0 = \{0\}$, $P_{1+} = \{1, 2, ..., n, ...\}$

- Plurality counting 0, 1, "2 or more" (i.e., "several") $P = (P_0, P_1, P_{2+})$ with $P_0 = \{0\}$, $P_1 = \{1\}$, $P_{2+} = \{2, 3, ..., n, ...\}$

- Generic counting, any partition P of the set of natural numbers N. This generic counting includes the natural, existence and plurality counting ways.

$$P = (P_i)_{i \in I}, \quad \text{with}: \begin{cases} I \subset N, \text{card}(I) \geq 2 \\ \forall i \in I, \ P_i \subset \mathbf{N}, P_i \neq \varnothing \\ \forall (i, j) \in I \times I, \ i \neq j \Rightarrow P_i \bigcap P_j = \varnothing \\ \bigcup_{i \in I} P_i = \mathbf{N} \end{cases}$$

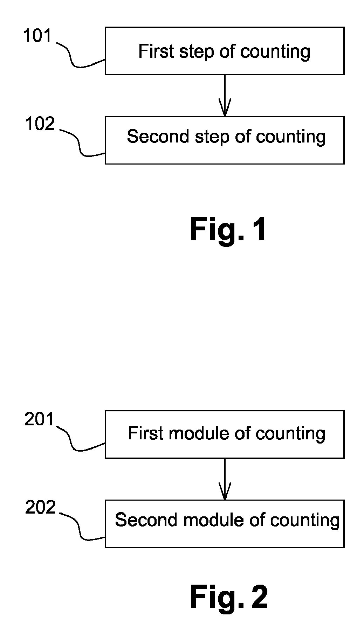

The figure 1 presents an embodiment of the method of the present subject matter. The aim of this method is to determine a class of an IoT service, the IoT service being characterized by a plurality of elements. Each element is characterized by a plurality of first characteristics belonging to a first type of characteristics and a plurality of second characteristics belonging to a second type of characteristics. The IoT service is realized by a set of connected objects that are involved in this IoT service, the method comprises:

- a first step 101 of counting, for at least one couple constituted of one of the first characteristics of the first type of characteristics and of one of the second characteristics of the second type of characteristics, a first number of elements having both this first characteristic and this second characteristic,
- a second step 102 of counting a second number of characteristics of the second type of characteristics for which, for each characteristic of the first type of characteristics, the first step counted the same first number of elements associated with this couple of first type of characteristics and second type of characteristics.

The characteristics of the first type of characteristics are also known as type 1 characteristics, the characteristics of the second type of characteristics are also known as type 2 characteristics.

In other words the method of the previous section uses as input a description of a composition of elements with their characteristics of type 1 and type 2. This method comprises the two following steps:

- A first step in which for each couple of element characteristic of type 1 and element characteristic of type 2 present in the composition of elements, count (for example by generic counting) the number of elements having this couple of characteristics. The result of this first step is a set of type 2 characteristic profiles, the profile of each type 2 characteristic can be, for example, represented by a table with two columns:

  ◦ First column: the list of type 1 characteristics present in the composition of elements in association with the type 2 characteristic;
  ◦ Second column: the corresponding generic counting, or other type of counting, of occurrences of (type 1, type 2) couple of characteristics in the composition of elements.

Other equivalent representations are possible (e.g., table with two rows, mathematical function, etc.). The row ordering in a table does not count: different row orderings correspond to the same table.

- A second step in which for each profile obtained in step 1, count (for example by generic counting) the number of element characteristics of type 2 having this profile.

The result and final output of the class identification method is the class of the composition of elements which can be represented by a table having two columns:

- First column: the list of type 2 characteristic profiles present in the composition of elements;
- Second column: their corresponding generic counting of occurrences in the composition of elements.

Other equivalent representations are possible (e.g., table with two rows, mathematical function, etc.). The row ordering in a table does not count: different row orderings correspond to the same table.

To be more specific the method of the previous section could be interpreted as taking in input the description of an IoT-based Service with their intrinsic and extrinsic characteristics. The method comprises:

- A first step in which for each couple of physical interface intrinsic characteristic and physical interface extrinsic characteristic (smart space) present in the IoT-based Service, count (for example by existence counting) the number of physical interfaces having this couple of characteristics. The result is a set of smart space profiles, the profile of each smart space can be represented by the list of intrinsic characteristics present in this smart space for the IoT-based Service. Compare to the embodiment of the previous section the representation is simplified here, indeed the second column of the profile table is useless, because the existence counting of present items always give "1". Other equivalent representations are possible (e.g., table with two rows, mathematical function, etc.). The row ordering in a table does not count: different row orderings correspond to the same table.

- A second step in which for each profile obtained in the first step, count (for example by plurality counting) the number of smart spaces having this profile

The result and final output of the class identification method is the class of the IoT-based Service which can be represented by a table having two columns:

- first column: the list of smart space profiles present in the IoT-based service ;
- second column: their corresponding plurality counting of occurrences in the IoT-based Service.

Another embodiment of the present subject matter is a system to determine a class of an IoT service. The IoT service is characterized by a plurality of elements, each element is characterized by a plurality of first characteristics belonging to a first type of characteristics and a plurality of second characteristics belonging to a second type of characteristics. The IoT service is realized by a set of connected objects that are involved in this IoT service, the system comprises:

- a first module 201 of counting, for at least one couple constituted of one of the first characteristics of the first type of characteristics and of one of the second characteristics of the second type of characteristics, a first number of elements having both this first characteristic and this second characteristic,
- a second module 202 of counting the number of characteristics of the second type of characteristics for which, for each characteristic of the first type of characteristics, the first step counted the same number of elements associated with this couple of first type of characteristics and second type of characteristics.

In an embodiment the system, of the previous section, comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions of the first and second counting modules are realized by the processor and may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

A person skilled in the art will readily recognize that steps of the methods of the present subject matter can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method, of the figure 1, to determine a class of an IoT service. The IoT service is characterized by a plurality of elements. Each element is characterized by a plurality of first characteristics belonging to a first type of characteristics and a plurality of second characteristics belonging to a second type of characteristics. The IoT service is realized by a set of connected objects that are involved in this IoT service, the method comprises:

- a first step (101) of counting, for at least one couple constituted of one of the first characteristics of the first type of characteristics and of one of the second characteristics of the second type of characteristics, a first number of elements having both this first characteristic and this second characteristic,
- a second step (102) of counting the number of characteristics of the second type of characteristics for which, for each characteristic of the first type of characteristics, the first step counted the same number of elements associated with this couple of first type of characteristics and second type of characteristics.

In an embodiment a computer-readable medium having embedded thereon a computer program described in the previous section is proposed.

## Claims

1. Method to determine a class of an IoT service, the IoT service being **characterized by** a plurality of elements, each element being **characterized by** a plurality of first characteristics belonging to a first type of characteristics and a plurality of second characteristics belonging to a second type of characteristics, the IoT service being realized by a set of connected objects that are involved in this IoT service, the method comprising:

   • a first step (101) of counting, for at least one couple constituted of one of the first characteristics of the first type of characteristics and of one of the second characteristics of the second type of characteristics, a first number of elements having both this first characteristic and this second characteristic,
   • a second step (102) of counting the number of characteristics of the second type of characteristics for which, for each characteristic of the first type of characteristics, the first step counted the same number of elements associated with this couple of first type of characteristics and second type of characteristics.

**2.** Method according to claim 1 wherein the first type characteristics comprise intrinsic characteristics of the elements.

**3.** Method according to claim 1 or 2 wherein the second type characteristics comprise extrinsic characteristics of the elements.

**4.** Method according to any of the previous claims wherein the elements being physical interfaces or connected objects.

**5.** Method according to any of the previous claims wherein the first step of counting being also configured to make a natural counting or to make an existence counting or to make a plurality counting.

**6.** Method according to any of the previous claims wherein the second step of counting being also configured to make a natural counting or to make an existence counting or to make a plurality counting.

**7.** System to determine a class of an IoT service, the IoT service being **characterized by** a plurality of elements, each element being **characterized by** a plurality of first characteristics belonging to a first type of characteristics and a plurality of second characteristics belonging to a second type of characteristics, the IoT service being realized by a set of connected objects that are involved in this IoT service, this system comprising

• a first module (201) of counting, for at least one couple constituted of one of the first characteristics of the first type of characteristics and of one of the second characteristics of the second type of characteristics, a first number of elements having both this first characteristic and this second characteristic
• a second module (202) of counting the number of characteristics of the second type of characteristics for which, for each characteristic of the first type of characteristics, the first step counted the same number of elements associated with this couple of first type of characteristics and second type of characteristics.

**8.** A computer-readable medium having embedded thereon a method to determine a class of an IoT service, the IoT service being **characterized by** a plurality of elements, each element being **characterized by** a plurality of first characteristics belonging to a first type of characteristics and a plurality of second characteristics belonging to a second type of characteristics, the IoT service being realized by a set of connected objects that are involved in this IoT service, the method comprising:

• a first step (101) of counting, for at least one couple constituted of one of the first characteristics of the first type of characteristics and of one of the second characteristics of the second type of characteristics, a first number of elements having both this first characteristic and this second characteristic,
• a second step (102) of counting the number of characteristics of the second type of characteristics for which, for each characteristic of the first type of characteristics, the first step counted the same number of elements associated with this couple of first type of characteristics and second type of characteristics.

**Amended claims in accordance with Rule 137(2) EPC.**

**1.** Method to determine a class of an IoT service, the IoT service being **characterized by** a plurality of elements, each element being **characterized by** a couple of two characteristics, one characteristic being of first type and the other characteristic being of a second type, the IoT service being realized by a set of connected objects that are involved in this IoT service, the elements being included in the connected objects, the method comprising:

• a first step (101) of counting, for at least one first couple constituted of a first characteristic of the first type of characteristics and of a second characteristic of the second type of characteristics, a first number of elements having both this first characteristic and this second characteristic,
• a second step (102) of counting a second number of third characteristics of the second type of characteristics for which, for each fourth characteristic of the first type of characteristics, the first step counted the same number of elements associated with each second couple constituted of this fourth characteristic of the first type of characteristics and one of these third characteristics of the second type of characteristics.

**2.** Method according to claim 1 wherein the first type characteristics comprise intrinsic characteristics of the elements.

**3.** Method according to claim 1 or 2 wherein the second type characteristics comprise extrinsic characteristics of the elements.

4. Method according to any of the previous claims wherein the elements being physical interfaces of connected objects.

5. Method according to any of the previous claims wherein the first step of counting being also configured to make a natural counting or to make an existence counting or to make a plurality counting.

6. Method according to any of the previous claims wherein the second step of counting being also configured to make a natural counting or to make an existence counting or to make a plurality counting.

7. System to determine a class of an IoT service, the IoT service being **characterized by** a plurality of elements, each element being characterized a couple of two characteristics, one characteristic being of first type and the other characteristic being of a second type, the IoT service being realized by a set of connected objects that are involved in this IoT service, the elements being included in the connected objects, this system comprising

   • a first module (201) of counting, for at least one first couple constituted of a first characteristic of the first type of characteristics and a second characteristic of the second type of characteristics, a first number of elements having both this first characteristic and this second characteristic
   • a second module (202) of counting a second number of third characteristics of the second type of characteristics for which, for each fourth characteristic of the first type of characteristics, the first step counted the same number of elements associated with each second couple constituted of this fourth characteristic of the first type of characteristics and one of these third characteristics of the second type of characteristics.

8. A computer-readable medium having embedded thereon a method to determine a class of an IoT service, the IoT service being **characterized by** a plurality of elements, each element being characterized a couple of two characteristics, one characteristic being of first type and the other characteristic being of a second type, the IoT service being realized by a set of connected objects that are involved in this IoT service, the elements being included in the connected objects, the method comprising:

   • a first step (101) of counting, for at least one first couple constituted of a characteristics of the first type of characteristic and a second characteristic of the second type of characteristics, a first number of elements having both this first characteristic and this second characteristic,
   • a second step (102) of counting a second number of third characteristics of the second type of characteristics for which, for fourth each characteristic of the first type of characteristics, the first step counted the same number of elements associated with each second couple constituted of this fourth characteristic of the first type of characteristics and one of these third characteristics of the second type of characteristics.

101 First step of counting

102 Second step of counting

# Fig. 1

201 First module of counting

202 Second module of counting

# Fig. 2

Europäisches
Patentamt

European
Patent Office

Office européen
des brevets

# EUROPEAN SEARCH REPORT

Application Number

EP 16 30 5130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WEI WANG ET AL: "A Comprehensive Ontology for Knowledge Representation in the Internet of Things", TRUST, SECURITY AND PRIVACY IN COMPUTING AND COMMUNICATIONS (TRUSTCOM), 2012 IEEE 11TH INTERNATIONAL CONFERENCE ON, IEEE, 25 June 2012 (2012-06-25), pages 1793-1798, XP032233640, DOI: 10.1109/TRUSTCOM.2012.20 ISBN: 978-1-4673-2172-3 * chapters III, IV * * figures 1,2 * | 1-8 | INV. H04L12/24 |
| A | EP 2 696 627 A2 (KT CORP [KR]) 12 February 2014 (2014-02-12) * paragraphs [0014], [0033] * * figures 4,5,6 * | 1-8 | |
| A | ALEXANDRU SERBANATI (CATTID) ET AL: "D3.3 Initial IoT Protocol Suite definition Deliverable Editor: Michele Rossi (CFR) Authors:", ITU-T DRAFT ; STUDY PERIOD 2013-2016, INTERNATIONAL TELECOMMUNICATION UNION, GENEVA ; CH, vol. m2m, 27 June 2012 (2012-06-27), pages 1-80, XP044097912, [retrieved on 2012-06-27] * chapter 4.4, page 8-9 * * chapter 6.4.3, page 24 * | 1-8 | TECHNICAL FIELDS SEARCHED (IPC) H04L |

-/--

The present search report has been drawn up for all claims

| Place of search | Date of completion of the search | Examiner |
|---|---|---|
| Munich | 8 July 2016 | Bertsch, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 30 5130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FREDJ SAMEH BEN ET AL: "A Scalable IoT Service Search Based on Clustering and Aggregation", 2013 IEEE INTERNATIONAL CONFERENCE ON GREEN COMPUTING AND COMMUNICATIONS AND IEEE INTERNET OF THINGS AND IEEE CYBER, PHYSICAL AND SOCIAL COMPUTING, IEEE, 20 August 2013 (2013-08-20), pages 403-410, XP032530605, DOI: 10.1109/GREENCOM-ITHINGS-CPSCOM.2013.86 [retrieved on 2013-12-11] * chapters III-V, pages 404 - 410 * | 1-8 | |
| A | HUR KANGHO ET AL: "Automated deployment of IoT services based on semantic description", 2015 IEEE 2ND WORLD FORUM ON INTERNET OF THINGS (WF-IOT), IEEE, 14 December 2015 (2015-12-14), pages 40-45, XP032854030, DOI: 10.1109/WF-IOT.2015.7389024 [retrieved on 2016-01-20] * chapter III * | 1-8 | TECHNICAL FIELDS SEARCHED (IPC) |

The present search report has been drawn up for all claims

| Place of search | Date of completion of the search | Examiner |
|---|---|---|
| Munich | 8 July 2016 | Bertsch, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 5130

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2016

| Patent document cited in search report | | Publication date | Patent family member(s) | | Publication date |
|---|---|---|---|---|---|
| EP 2696627 | A2 | 12-02-2014 | EP | 2696627 A2 | 12-02-2014 |
| | | | KR | 20120127050 A | 21-11-2012 |
| | | | US | 2014064232 A1 | 06-03-2014 |
| | | | WO | 2012157849 A2 | 22-11-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BEN FREDJ ; M. BOUSSARD ; D. KOFMAN ; L. NOIRIE.** A scalable IoT service search based on clustering and aggregation. *iThings 2013,* August 2013, http://dx.doi.org/10.1109/GreenCom-iThings-CPSCom.2013.86